# NOUVEAU FASCICULE DE BREVET EUROPEEN

(11) **EP 2 900 927 B2**
(45) Date de publication et mention de la décision concernant l'opposition: **21.04.2021**
(45) Mention de la délivrance du brevet: 08.11.2017
(21) Numéro de dépôt: 13785489.9
(22) Date de dépôt: 26.09.2013
(51) Int. Cl.: F01D 5/30, F01D 5/26

(54) **ATTACHE AUTO-SERRANTE POUR AUBE DE TURBINE EN CMC**
SELBSTKLEMMENDER VERSCHLUSS FÜR CMC-TURBINENSCHAUFEL
SELF-CLAMPING FASTENER FOR CMC TURBINE BLADE

(30) Priorité: 28.09.2012 FR 1259175
(43) Date de publication de la demande: 05.08.2015
(73) Titulaire: Safran Aircraft Engines, 75015 Paris (FR)
(72) Inventeur: GALLET, François, F-77550 Moissy-Cramayel (FR)
(74) Mandataire: Gevers & Orès
(86) Numéro de dépôt international: PCT/FR2013/052278
(87) Numéro de publication internationale: WO 2014/049280

(56) Documents cités:
- DE-C- 818 442
- FR-A1- 2 608 674
- GB-A- 914 548
- JP-A- H07 332 006
- US-A- 2 727 716
- US-A- 2 821 357
- US-A- 3 713 752

## Description

Le domaine de la présente invention est celui des turbomachines et, plus particulièrement, celui des aubes de turbine de ces turbomachines.

Une turbomachine pour un aéronef comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz. A chaque compresseur peut correspondre une turbine, les deux étant reliés par un arbre, formant ainsi, par exemple, un corps haute pression (HP) et un corps basse pression (BP).

Les aubes de turbine sont des pièces qui sont soumises à de très hautes températures et à de fortes contraintes mécaniques dues à la force centrifuge qui s'exerce sur elles. En particulier, la performance des moteurs modernes exige que la température à laquelle sont soumises les aubes de turbine haute pression soit la plus élevée possible. Pour cela ces aubes sont traditionnellement réalisées en matériau métallique mais il serait intéressant de réaliser ces aubes en matériau composite, et, notamment en un matériau composite à matrice céramique (CMC). L'avantage des pièces en CMC est en effet leur faible masse volumique et leur excellente tenue en température. En revanche leur principal défaut réside dans une moindre tenue aux contraintes et dans une susceptibilité au matage, ce qui rend difficile leur utilisation pour des aubes de turbine.

Des travaux ont en premier lieu été menés pour utiliser ce matériau dans la conception des aubes de turbine BP, comme par exemple dans la demande de brevet FR2943942 de la demanderesse, car celles-ci sont soumises à des températures comparativement moins élevées, mais il serait intéressant d'utiliser également cette technologie pour des aubes de turbine HP.

Un des problèmes rencontrés toutefois pour adapter la technologie des CMC à la fabrication des aubes de turbine réside dans la difficulté de concevoir un dispositif d'attache de ces aubes sur le disque de turbine correspondant, car les contraintes sont très importantes dans ces attaches, notamment au regard des caractéristiques du matériau CMC.

Les études sur des attaches en CMC ayant la forme conventionnelle d'une queue d'aronde ou d'un bulbe enchâssé dans une dent du disque ont mise en évidence plusieurs difficultés qui sont associées à cette configuration. Tout d'abord, les dimensions dans le cas d'une telle queue d'aronde étant fortement limitées par l'espace disponible entre les aubes, celles-ci sont sujettes à d'importantes contraintes de matage, qui sont trop importantes pour du CMC. En outre, un tel dispositif se traduit par des formes difficiles à réaliser en CMC, car complexes. Il faut en effet réaliser un bulbe, en écartant généralement ces fibres pour y insérer un renfort entre elles. Et les contraintes de flexion sont aggravées par les coefficients de concentration de contraintes qui sont dus à la complexité de ces formes. Enfin, pour qu'un tel dispositif de queue d'aronde puisse fonctionner, il faudrait limiter les tolérances de fabrication de ces pièces, ce qui est encore difficile à réaliser, à l'heure actuelle, pour des pièces en CMC.

On connait cependant diverses configurations pour des aubes haute pression réalisées en matériau composite, comme celles décrites dans la demande de brevet FR 2608674 de la demanderesse, ou bien encore dans les brevets US 2727716, JP H07 332006 ou GB 914548.

Ces configurations ont cependant pour inconvénient qu'elles sont difficiles à monter sur le disque car elles nécessitent plusieurs opérations, avec l'implantation de pièces auxiliaires. En particulier il n'est pas possible de les monter depuis la face externe du disque, ce qui représente un avantage conséquent en matière de temps pour l'équipement en aubes d'une roue de turbine HP. La présente invention a pour but de remédier à ces inconvénients en proposant un dispositif d'attache pour les aubes de turbine qui soit compatible de la réalisation d'une aube en CMC et dont l'installation sur le disque soit relativement aisée et rapide à mettre en oeuvre.

A cet effet, l'invention a pour objet un disque de turbine pour une turbomachine comportant sur sa périphérie un moyen d'accrochage d'une aube de turbine comportant une pale s'étendant au-dessus d'une plate-forme et un pied s'étendant en-dessous de ladite plate-forme, le pied de ladite aube ayant la forme d'une branche s'étendant radialement, étant réalisée en matériau composite et comportant au moins une première face, orientée axialement, plane ou cylindrique dont la direction des génératrices est orientée en direction de ladite plate-forme, de façon à permettre le glissement d'une pièce de serrage sur ladite face plane ou cylindrique sous l'action de la force centrifuge qui s'exerce sur ladite aube en fonctionnement sur une turbomachine, caractérisé en ce que ladite branche comporte à son extrémité inférieure un ergot formant une extrémité du pied et procurant un point d'appui radial pour une coopération avec un élément de retenue de l'aube sur un disque de turbine et en ce que le pied est entièrement situé du côté dudit ergot par rapport à ladite première face, ledit moyen d'accrochage comportant une première face orientée axialement, plane ou cylindrique dont la direction des génératrices est orientée dans un plan radial, en faisant un angle inférieur à 45° par rapport à la direction radiale, de façon à permettre le glissement d'une pièce de serrage sur ladite première face sous l'action de la force centrifuge qui s'exerce sur ladite aube en fonctionnement sur une turbomachine, caractérisé en ce que ledit moyen d'accrochage a la forme d'un longeron s'étendant axialement entre deux demi-disques radiaux, ledit longeron s'étendant radialement vers l'intérieur de façon à former un élément de retenue radiale de l'aube de turbine..

Un tel angle est considéré comme encore suffisamment faible pour permettre le glissement d'une pièce de serrage à la forme adaptée, sur la face cylindrique inclinée du moyen d'accrochage, sous l'action de la force centrifuge qui s'exerce sur ladite aube en fonctionnement sur une turbomachine. Il convient de noter que pour faciliter ce mouvement de serrage, il est possible d'introduire des éléments roulants ou des lamelles déformables à l'interface entre ces pièces, pour supprimer tous les phénomènes de frottement

La forme donnée au pied de l'aube permet de la fixer sur le disque par une pièce de serrage qui vient la coincer contre une paroi coopérante, positionnée sur le disque. On peut ainsi donner une forme simple à l'aube tout en garantissant sa tenue sur un disque. La simplicité de forme obtenue donne la possibilité de réaliser l'aube en matériau composite à matrice céramique. De plus la présence d'un ergot à sa partie inférieure permet de disposer d'un appui radial qui assure la rétention de l'aube. Enfin le fait que l'aube se situe entièrement du côté de cet ergot par rapport à la face sur laquelle coulisse la pièce de serrage permet un montage de l'aube depuis la face externe du disque et donc, facilite grandement son montage.

Avantageusement le moyen d'accrochage comporte deux faces planes ou cylindriques orientées axialement, dont les directions des génératrices convergent l'une vers l'autre en direction de l'intérieur du disque selon un angle inférieur ou égal à 45°, l'une formant support pour le glissement de ladite pièce de serrage et l'autre étant conformée, à sa partie inférieure, pour former un élément de retenue radiale d'une aube.

Dans un mode préférentiel de réalisation les deux faces sont planes, l'une étant orientée radialement et la seconde faisant un angle inférieur ou égal à 30° avec la direction radiale. Préférentiellement le disque de turbine comporte en outre une pièce de serrage comportant deux faces planes ou cylindriques dont la direction des génératrices est orientée respectivement parallèlement à chacune des deux faces cylindriques du moyen d'accrochage, ladite pièce étant positionnée en appui contre une des faces planes ou cylindriques dudit moyen d'accrochage.

De façon préférentielle ladite pièce de serrage est un coin à deux faces planes, l'une faisant avec l'autre un angle inférieur ou égal à 30°.

L'invention porte enfin sur une turbomachine comportant au moins un tel disque de turbine.

L'invention sera mieux comprise, et d'autres buts, détails, caractéristiques et avantages de celle-ci apparaîtront plus clairement au cours de la description explicative détaillée, qui va suivre, d'un mode de réalisation de l'invention donné à titre d'exemple purement illustratif et non limitatif, en référence aux dessins schématiques annexés.

Sur ces dessins :
- la figure 1 est une vue en perspective d'un disque de turbine équipé d'aubes réalisées en CMC et tenues par une attache selon un mode de réalisation de l'invention, et
- la figure 2 est une vue de détail de la figure 1.

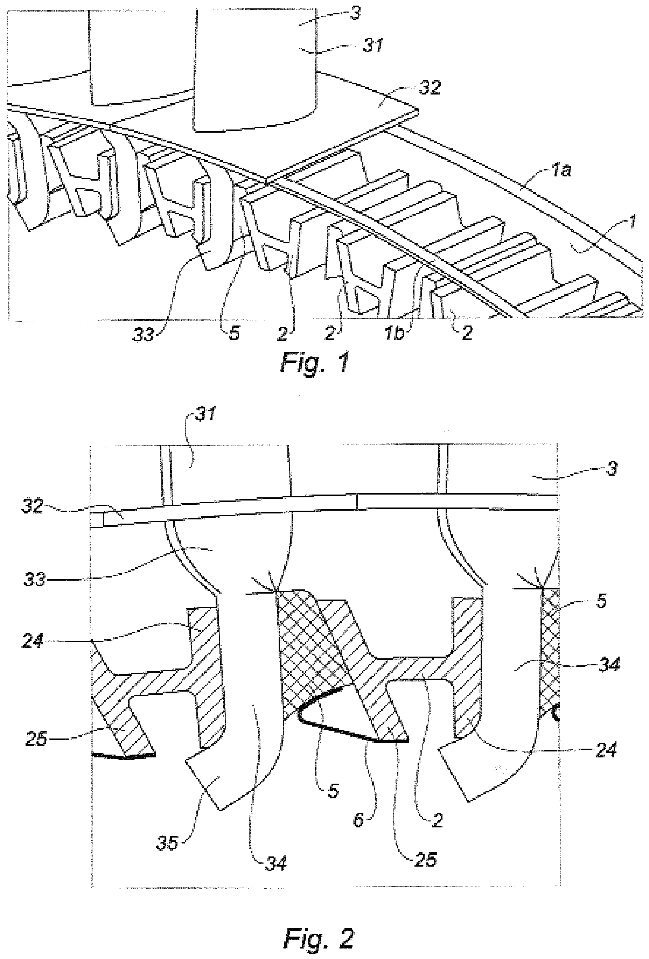

En se référant à la figure 1, on voit la partie supérieure d'un disque de turbine 1 qui est séparée en deux demi-disques, référencés 1a à l'amont et 1b à l'aval en référence au sens de circulation des gaz dans la veine de la turbomachine. Pour des raisons de lisibilité de la figure, seule la trace supérieure du demi-disque aval 1b est représentée. Entre les parties supérieures des deux demi-disques s'étendent axialement des longerons 2, en forme de pontets, qui relient les faces radiales des demi-disques entre elles et qui leur transmettent les efforts de rétention des aubes de turbine montées sur le disque 1. Le nombre de longerons 2 est égal au nombre d'aubes 3 qui sont montées sur le disque, chacune des aubes prenant place entre deux longerons 2 consécutifs. Ces longerons ont, en coupe radiale, la forme d'un H, sans que cette forme soit impérative, l'important étant cependant que sa forme présente deux faces latérales dont l'orientation spécifique sera décrite plus en détail, en relation avec la figure 2.

Les aubes de turbine, comportent une pale 31 s'étendant radialement au-dessus d'une plate-forme 32 qui repose sur la tranche extérieure des demi-disques 1a et 1b. Elle se prolonge, par ailleurs, en-dessous de cette plate-forme, par un pied 33 qui est réalisé en matériau composite du type CMC et qui a la forme d'une paroi s'étendant radialement, c'est-à-dire perpendiculairement à la plate-forme 32, et qui est orientée dans un plan axial, c'est-à-dire selon un des côtés de ladite plate-forme. Cette paroi a, en coupe radiale, la forme d'un J majuscule dont la branche principale s'étend radialement jusqu'à venir dépasser l'envergure radiale d'un longeron 2 ; elle se termine par un ergot, formant crochet, qui est destiné à passer sous ce longeron pour y prendre appui et assurer un positionnement précis de l'aube par rapport au disque.

La figure 2 montre en coupe radiale la disposition des différents éléments contribuant au maintien d'une aube 3 sur un disque de turbine 1. Le longeron 2 comporte circonférentiellement, sur un premier côté, une face sensiblement radiale 24, contre laquelle s'appuie la branche radiale 34 du pied 33 et sous laquelle vient se placer le crochet 35 formant l'extrémité du pied 33. Il comporte, sur le côté opposé, une face 25 alignée selon un plan axial mais qui est inclinée par rapport au plan radial d'un angle d'environ 30°, de façon à former une rampe pour une pièce de serrage 5. La pièce de serrage a la forme d'un coin qui s'insère entre la branche radiale 34 du pied de l'aube et la face inclinée 25 du longeron 2 et dont la pointe est orientée en direction de la plate-forme 32. Elle présente en conséquence, d'un côté, une face plane orientée radialement, qui coopère avec la branche radiale plane 34 du pied de l'aube 3 et, de l'autre côté, une face inclinée, elle aussi d'un angle d'environ 30° par rapport à sa face radiale pour s'aligner parallèlement à la face inclinée 25 du longeron 2 et coopérer avec celle-ci de façon à maintenir l'aube 3 en position sur le disque 1.

En effet, en rotation, la pièce de serrage 5 a tendance, sous l'effet du champ centrifuge, à glisser le long de la face inclinée 25, et donc a exercer une pression contre la surface 34. Cette pression va donner lieu à un phénomène d'adhérence, qui va permettre de reprendre les efforts centrifuges subis par l'aube.

Il convient de noter que le mouvement de la pièce de serrage 5 vis-à-vis de la face inclinée 25 peut être éventuellement facilitée par la mise en place de rouleaux ou d'une lamelle déformable entre ces deux pièces ; en effet, ceci permettrait de diminuer le frottement entre ces deux pièces.

La figure 2 montre également, en coupe, une pièce annulaire à section en V, formant ressort 6 pour maintenir la pièce de serrage 5 en pression contre, d'un côté, la branche radiale 34 du pied de l'aube et, de l'autre côté, la face inclinée 25 du longeron 2. Elle s'étend selon la circonférence du disque, une première branche du V de ce ressort prenant appui contre la semelle interne du longeron 2, alors que la seconde branche du V vient exercer une pression contre la face interne de la pièce de serrage 5, repoussant cette pièce vers l'extérieur quand la turbomachine est à l'arrêt et alors qu'aucune force centrifuge ne s'exerce sur elle.

On va maintenant décrire la mise en place d'une aube de turbine en CMC sur un disque de turbine et son mode de fixation grâce à un dispositif d'attache selon l'invention, ainsi que le principe de serrage de l'aube sur le disque lors du fonctionnement de la turbomachine.

Le disque 1 présente donc une série de longerons 2 qui sont portés par les deux demi-disques 1a et 1b et qui présentent une espace libre à leur partie inférieure.

L'opérateur installe en premier lieu le ressort 6 en le faisant passer par l'espace existant entre deux longerons 2 adjacents et en venant placer l'extrémité axiale de la branche du V la plus interne, à l'intérieur de l'alésage central du longeron 2 qui jouxte l'aube à monter. Il passe de même la pièce de serrage 5 dans cet espace et vient l'appuyer, par sa face interne, contre la seconde branche du V du ressort 6. Ensuite tout en repoussant la pièce de serrage 5 vers le bas, en comprimant le ressort, ce qui l'éloigne du longeron 2 précédent, il introduit le pied 33 de l'aube à monter dans le même espace, jusqu'à faire passer le crochet 35 de la partie inférieure du pied 33 de l'aube sous la branche radiale 24 du longeron. L'aube est alors positionnée radialement par son crochet et ne peut plus s'échapper vers le haut. Puis il relâche la pièce de serrage 5 qui remonte sous l'effet du ressort 6 et, en glissant le long de la face inclinée 25 du longeron 2 adjacent vient, d'une part, repousser la face radiale 34 du pied de l'aube et, d'autre part, la presser contre son longeron porteur, ce qui assure la mise en place de l'aube et son positionnement stable sur le disque 1.

Dans une version où aucun ressort n'est utilisé, la mise en place de la pièce de serrage est assurée par la force centrifuge qui s'exerce lors de la rotation de la turbomachine, en l'entraînant la pièce 5 vers l'extérieur et en la faisant monter en glissant sur la face inclinée 25 du longeron 2 adjacent. On aboutirait, au même résultat en utilisation que précédemment, à savoir que le pied de l'aube est serré par la pièce de serrage contre son longeron 2 porteur et que l'aube 3 est maintenue de façon stable sur le disque 1 par son crochet 35 et la coopération de celui-ci avec la branche radiale 24 du longeron.

Il convient de noter que cet effort de serrage, qui se traduit par une adhérence qui empêche l'aube de se déplacer sous l'action de ses propres efforts centrifuges, est proportionnel aux efforts centrifuges de la pièce de serrage, et qu'il est donc proportionnel aux efforts centrifuges de l'aube. Ainsi, quelle que soit la vitesse de rotation, et notamment en cas de survitesse du rotor portant l'aube, il n'y a pas de risque que l'aube se détache. Les principaux avantages apportés par l'invention peuvent se résumer comme suit :
Le système rattrape automatiquement les jeux entre l'aube et le disque. Ainsi, quelles que soient les dilatations thermomécaniques du disque, le serrage sera toujours le même, car il est uniquement déterminé par la vitesse de rotation de disque.

Comme ce système s'adapte tout seul à la géométrie de l'aube, il n'impose pas de tolérance de fabrication précise sur le pied 33 de l'aube ou sur la pièce de serrage 5. Ainsi, il n'est pas nécessaire de rectifier la portée de l'attache composite, ce qui limite d'autant les coûts de fabrication.

La forme du pied d'aube 33 en matériau composite est elle-même très simple, car purement rectiligne ; elle est donc peu onéreuse à fabriquer.

La surface de contact entre le pied 33 de l'aube 3 et sa pièce de serrage 5 peut être augmentée autant que nécessaire ; il est donc possible de l'ajuster pour limiter les contraintes de matage du composite, et ainsi respecter la contrainte de matage admissible pour le matériau du pied.

Enfin la masse de la pièce de serrage est extrêmement faible, typiquement de l'ordre de 10 grammes. Il est donc possible d'évider les longerons et de leur donner la forme en H décrite ci-dessus, tout en conservant les deux faces planes destinées à venir en appui contre la branche radiale 34 du pied d'aube et de la branche inclinée 25 de la pièce de serrage. Cette réduction de masse du longeron 2, associée à celle obtenue par le choix du matériau CMC pour la réalisation de l'aube, permet d'avoir un disque particulièrement léger et de dimensions réduites.

L'invention a été décrite avec une face plane pour la partie radiale 34 du pied sur laquelle vient glisser la pièce de serrage 5. Il est bien évident que l'invention peut également être réalisée avec une face non plane pour la partie du pied en contact avec la pièce de serrage, pour autant que ladite pièce de serrage comporte une face qui puisse coopérer avec elle dans un glissement vers l'extérieur du disque. Ainsi, toute surface cylindrique dont la direction des génératrices est orientée en direction de ladite plate-forme permet de réaliser l'invention, puisqu'elle permet le glissement d'une pièce de serrage à la forme adaptée, sous l'action de la force centrifuge qui s'exerce sur ladite aube en fonctionnement sur une turbomachine.

Il en est de même pour la face inclinée 25 du longeron 2 qui peut avoir une face cylindrique dont la direction des génératrices est orientée avec un angle inférieur à 45° par rapport à la direction radiale. Un tel angle est considéré comme encore suffisamment faible pour permettre le glissement d'une pièce de serrage à la forme adaptée, sur ladite face cylindrique inclinée sous l'action de la force centrifuge qui s'exerce sur ladite aube en fonctionnement sur une turbomachine. Mais, idéalement, l'angle au sommet du coin constituant la pièce de serrage 5 se situe aux alentours de 30° pour que la pièce de serrage fournisse une force d'appui suffisante, sans que le déplacement du coin le long des faces des pièces qu'il bloque soit trop important.

## Revendications

1. Disque de turbine pour une turbomachine comportant sur sa périphérie un moyen d'accrochage (2) d'une aube de turbine comportant une pale (31) s'étendant au-dessus d'une plate-forme (32) et un pied (33) s'étendant en-dessous de ladite plate-forme, le pied de ladite aube ayant la forme d'une branche (34) s'étendant radialement, étant réalisée en matériau composite et comportant au moins une première face, orientée axialement, plane ou cylindrique dont la direction des génératrices est orientée en direction de ladite plate-forme, de façon à permettre le glissement d'une pièce de serrage (5) sur ladite face plane ou cylindrique sous l'action de la force centrifuge qui s'exerce sur ladite aube en fonctionnement sur une turbomachine, ladite branche comportant à son extrémité inférieure un ergot (35) formant une extrémité du pied (33) et procurant un point d'appui radial pour une coopération avec un élément de retenue de l'aube sur un disque de turbine (1), et le pied (33) étant entièrement situé du côté dudit ergot par rapport à ladite première face, ledit moyen d'accrochage comportant une première face, orientée axialement, plane ou cylindrique (25) dont la direction des génératrices est orientée dans un plan radial, en faisant un angle inférieur à 45° par rapport à la direction radiale, de façon à permettre le glissement d'une pièce de serrage (5) sur ladite première face sous l'action de la force centrifuge qui s'exerce sur ladite aube en fonctionnement sur une turbomachine,
**caractérisé en ce que** ledit moyen d'accrochage a la forme d'un longeron s'étendant axialement entre deux demi-disques radiaux, ledit longeron s'étendant radialement vers l'intérieur de façon à former un élément (24) de retenue radiale de l'aube de turbine.

2. Disque de turbine selon la revendication 1 dans lequel le moyen d'accrochage (2) comporte deux faces planes ou cylindriques (24, 25) orientées axialement, dont les directions convergent l'une vers l'autre en direction de l'intérieur du disque selon un angle inférieur ou égal à 45°, l'une formant support pour le glissement de ladite pièce de serrage et l'autre étant conformée, à sa partie inférieure, pour former un élément de retenue radiale d'une aube.

3. Disque de turbine selon la revendication 2 dans lequel les deux faces sont planes, l'une étant orientée radialement et la seconde faisant un angle inférieur ou égal à 30° avec la direction radiale.

4. Disque de turbine selon l'une des revendications 2 ou 3 comportant en outre une pièce de serrage (5) comportant deux faces planes ou cylindriques dont la direction des génératrices est orientée respectivement parallèlement à chacune des deux faces cylindriques du moyen d'accrochage, ladite pièce étant positionnée en appui contre une des faces planes ou cylindriques (25) dudit moyen d'accrochage.

5. Disque de turbine selon la revendication 4 dans lequel ladite pièce de serrage est un coin à deux faces planes, l'une faisant avec l'autre un angle inférieur ou égal à 30°.

6. Disque de turbine selon l'une des revendications 1 à 5, dans lequel ladite première face de l'aube est orientée selon un angle inférieur ou égal à 30° avec la direction radiale.

7. Disque de turbine selon l'une des revendications 1 à 6, dans lequel laquelle ladite branche (34) comporte une seconde face plane ou cylindrique dont la direction des génératrices est orientée en direction de ladite plate-forme, orientée radialement, à partir de laquelle s'étend ledit ergot, dans une direction opposée à la première face de l'aube.

8. Turbomachine comportant au moins un disque de turbine selon l'une des revendications précédentes.

## Patentansprüche

1. Turbinenscheibe für eine Turbomaschine, umfassend auf ihrem Umfang ein Einhängemittel (2) einer Turbinenschaufel, die ein Blatt (31), das sich über einer Plattform (32) erstreckt, und einen Fuß (33), der sich unter der Plattform erstreckt, umfasst, wobei der Fuß der Schaufel die Form eines Schenkels (34) aufweist, der sich radial erstreckt, der aus Verbundmaterial hergestellt ist und mindestens eine ebene oder zylindrische, erste Fläche umfasst, die axial ausgerichtet ist, wovon die Richtung der Mantellinien in Richtung der Plattform derart ausgerichtet ist, um das Gleiten eines Klemmteils (5) auf der ebenen oder zylindrischen Fläche unter der Wirkung der Zentrifugalkraft zu ermöglichen, die auf die Schaufel im Betrieb an einer Turbomaschine ausgeübt wird, wobei der Schenkel an seinem unteren Ende einen Sporn (35) umfasst, der ein Ende des Fußes (33) bildet und einen radialen Abstützpunkt für ein Zusammenwirken mit einem Halteelement der Schaufel auf einer Turbinenscheibe (1) bereitstellt, und wobei der Fuß (33) vollständig auf der Seite des Sporns in Bezug auf die erste Fläche angeordnet ist, wobei das Einhängemittel eine ebene oder zylindrische, erste Fläche (25), die axial ausgerichtet ist, umfasst, wovon die Richtung der Mantellinien in einer radialen Ebene unter Bildung eines Winkels, der kleiner als 45° ist, in Bezug auf die radiale Richtung derart ausgerichtet ist, um das Gleiten eines Klemmteils (5) auf der ersten Fläche unter der Wirkung der Zentrifugalkraft zu ermöglichen, die auf die Schaufel im Betrieb an einer Turbomaschine ausgeübt wird,
**dadurch gekennzeichnet, dass** das Einhängemittel die Form eines Längsträgers aufweist, der sich axial zwischen zwei radialen Scheibenhälften erstreckt, wobei sich der Längsträger derart nach innen erstreckt, um ein radiales Halteelement (24) einer Turbinenschaufel zu bilden.

2. Turbinenscheibe nach Anspruch 1, wobei das Einhängemittel (2) zwei ebene oder zylindrische Flächen (24, 25) umfasst, die axial ausgerichtet sind, deren Richtungen in Richtung des Inneren der Scheibe gemäß einem Winkel, der kleiner als oder gleich 45° ist, zueinander konvergieren, wobei die eine eine Stütze für das Gleiten des Klemmteils bildet und die andere an ihrem unteren Teil ausgebildet ist, um ein radiales Halteelement einer Schaufel zu bilden.

3. Turbinenscheibe nach Anspruch 2, wobei die zwei Flächen eben sind, wobei die eine radial ausgerichtet ist und die zweite einen Winkel, der kleiner als oder gleich 30° ist, mit der radialen Richtung bildet.

4. Turbinenscheibe nach einem der Ansprüche 2 oder 3, weiter umfassend ein Klemmteil (5), das zwei ebene oder zylindrische Flächen umfasst, wovon die Richtung der Mantellinien jeweils parallel zu jeder der zwei zylindrischen Flächen des Einhängemittels ausgerichtet ist, wobei das Teil in Anlage gegen eine der ebenen oder zylindrischen Flächen (25) des Einhängemittels angeordnet ist.

5. Turbinenscheibe nach Anspruch 4, wobei das Klemmteil eine Ecke mit zwei ebenen Flächen ist, wobei die eine mit der anderen einen Winkel bildet, der kleiner als oder gleich 30° ist.

6. Turbinenscheibe nach einem der Ansprüche 1 bis 5, wobei die erste Fläche gemäß einem Winkel, der kleiner als oder gleich 30° ist, mit der radialen Richtung angeordnet ist.

7. Turbinenscheibe nach einem der Ansprüche 1 bis 6, wobei der Schenkel (34) eine ebene oder zylindrische, zweite Fläche umfasst, wovon die Richtung der Mantellinien in Richtung der Plattform ausgerichtet ist, radial ausgerichtet, von der aus sich der Sporn in einer entgegengesetzten Richtung zu der ersten Fläche der Schaufel erstreckt.

8. Turbomaschine, umfassend mindestens eine Turbinenscheibe nach einem der vorstehenden Ansprüche.

## Claims

1. Turbine disc for a turbine engine comprising on its periphery a gripping means (2) for attaching a turbine vane comprising a blade (31) extending above a platform (32) and a root (33) extending below said platform, the root of the said vane having the form of a radially extending arm (34), being produced from composite material and having at least a first plane or cylindrical face, oriented axially, the direction of the generatrices of which is oriented towards said platform, so as to allow a clamping piece (5) to slide on said plane or cylindrical face under the action of the centrifugal force that is exerted on said vane during operation on a turbine engine, said arm has at its lower end a protuberance (35) forming one end of the root (33) and providing a radial bearing point for cooperation with an element for retaining the vane on a turbine disc (1), and the root (33) being located entirely on the side of said protuberance relative to said first face, said gripping means having a first plane or cylindrical (25) face, oriented axially, the direction of the generatrices of which is oriented in a radial plane, forming an angle of less than 45° relative to the radial direction, so as to allow a clamping piece (5) to slide on said first face under the action of the centrifugal force that is exerted on said vane during operation on a turbine engine,
**characterised in that** said gripping means has the form of a spar extending axially between two radial half-discs, said spar extending radially inwards so as to form an element (24) for radially retaining a turbine vane.

2. Turbine disc according to claim 1 wherein the gripping means (2) has two plane or cylindrical faces (24, 25), oriented axially, the directions of which converge on one another towards the inside of the disc at an angle less than or equal to 45°, one forming a support for the sliding of said clamping piece and the other being shaped, at its lower portion, to form an element for radially retaining a vane.

3. Turbine disc according to claim 2 wherein both faces are plane, the first being oriented radially and the second forming an angle less than or equal to 30° with the radial direction.

4. Turbine disc according to either claims 2 or 3 further comprising a clamping piece (5) comprising two plane or cylindrical faces, the direction of the generatrices of which is oriented parallel to each of the two cylindrical faces of the gripping means respectively, said piece being positioned so that it bears against one of the plane or cylindrical faces (25) of said gripping means.

5. Turbine disc according to claim 4 wherein said clamping piece is a wedge with two plane faces, one forming with the other an angle less than or equal to 30°.

6. Turbine disc according to one of claims 1 to 5, wherein said first face of the vane is oriented at an angle less than or equal to 30° with the radial direction.

7. Turbine disc according to one of claims 1 to 6, wherein said arm (34) comprises a second plane or cylindrical face, the direction of the generatrices of which is oriented towards said platform, oriented radially, from which said protuberance extends in a direction opposed to the first face of the vane.

8. Turbine engine comprising at least one turbine disc according to one of the preceding claims.
